(19) Europäisches Patentamt
European Patent Office
Office européen des brevets

(11) EP 4 752 669 A2

(12) EUROPEAN PATENT APPLICATION

(43) Date of publication:
03.06.2026 Bulletin 2026/23

(51) International Patent Classification (IPC):
$G05D\ 21/02^{(2006.01)}$

(21) Application number: 26171292.1

(52) Cooperative Patent Classification (CPC):
G05D 21/02

(22) Date of filing: 22.05.2023

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(62) Document number(s) of the earlier application(s) in accordance with Art. 76 EPC:
23733484.2 / 4 716 878

(71) Applicant: Micro Motion, Inc.
Boulder, CO 80301 (US)

(72) Inventors:
• MORETT, David Martinez
Ft. Collins, 80521 (US)
• DEACY, James S.
Boulder, 80304 (US)

• LANHAM, Gregory Treat
Longmont, 80501 (US)
• HOLLINGSWORTH, Justin Craig
Salem, 24153 (US)
• LEVIN, Benjamin Ross
Erie, 80516 (US)
• LAKSHMIKUMARAN, Anand V.
Denver, 80234 (US)

(74) Representative: Ellis, Christopher Paul
Ollila Law Limited
Edwards Centre
The Horsefair
Hinckley LE10 0AN (GB)

Remarks:
This application was filed on 08-04-2026 as a divisional application to the application mentioned under INID code 62.

(54) **CONTROLLING A CONCENTRATION OF A COMPONENT IN A THREE-COMPONENT MIXTURE OBTAINED BY MIXING TWO FLUID SOURCES**

(57) A method of controlling a concentration of a component of a three-component mixture obtained by mixing two fluid sources is provided. The method includes measuring a fluid parameter of one of a first fluid comprising a first component and a third component of the three-component mixture, a second fluid comprising at least a second component of the three-component mixture, and the three-component mixture comprising the first component, the second component, and the third component. The method further includes determining a concentration correlation parameter value based on the measured fluid parameter, measuring a density of one of the first fluid, the second fluid, and the three-component mixture, and controlling a concentration of one of the first component and the second component in the three-component mixture based on the measured density and concentration correlation parameter.

900

910 Measure a fluid parameter of one of a first fluid, a second fluid, and a three-component mixture

920 Determine a concentration correlation parameter value based on the measured fluid parameter

930 Measure a density of one of the first fluid, the second fluid, and the three-component mixture

940 Controlling a concentration of one of the first component and the second component in the three-component mixture based on the measured density and the concentration correlation parameter

FIG. 9

EP 4 752 669 A2

**Description**

TECHNICAL FIELD

The embodiments described below relate to a concentration of a component in a multi-component fluid and, more particularly, to determining a controlling a concentration of a component in a three-component mixture obtained by mixing two fluid sources.

BACKGROUND

Three-component fluids are sometimes a result of mixing two fluids. Each of the two fluids can include two components of the three-component fluid. For example, a given three-component fluid can be comprised of a first, second, and third component. The first fluid can be comprised of the first component and the third component of the three-component fluid. The second fluid may be comprised of the second component and the third component. As can be appreciated, both the first and second fluid include the third component. For example, the first and second fluid may each be a solution comprising a solute and a solvent. Additionally, the first fluid and the second fluid may each have the same solvent. Accordingly, the third component of the three-component fluid may be a solvent of a solution having the first and second component as solutes. However, the first component is different than the second component. The solvent may be any suitable solvent, such as water, hydrogen, alcohol, or the like, and the solutes may be any suitable solute, such as sugar, alcohol, polymers, hydrocarbons, etc.

The first and second fluid may respectively have a ratio of first component to the first fluid solution and a second component to the second fluid solution. For example, the first fluid may have an amount of the first component relative to an amount of the first fluid and the second fluid may have an amount of the second component relative to an amount of the second fluid. These relative amounts may be referred to as a concentration of the first component in the first fluid and a concentration of the second component in the second fluid. Similarly, the three-component fluid may have a solute to total solution ratio that is a concentration of the first component to the three-component fluid solution. Alternative terms may be a first fluid concentration, a second fluid concentration, and three-component fluid concentration. The first and second fluid concentrations may be expressed in mass, volume, or any other suitable physical parameter that is related to an amount of a substance. The concentrations may be ratios of mass relative to mass, volume, or the like. The concentrations may be expressed in any suitable units, such as kg, lbm, kg/m^3, etc. The concentrations may be referred to as a concentration of a solute, although any suitable components may be employed.

The first and second fluid may respectively be supplied by a first and second fluid source. The first and second fluid source may be comprised of a fluid having a constant ratio of solute to total amount of fluid ratio. For example, the first fluid may have a first component to total volume of fluid ratio and the second fluid may have a second component to total volume ratio that are respectively constant. Alternatively, the solute to solvent ratio may vary. For example, the first fluid may be provided by a first component source and a third component source, and the second fluid may be provided by a second component source and a third component source, one or more of which has an adjustable flow rate.

A first and second fluid concentration may be relatively simple to determine. However, measuring and/or controlling a three-component fluid concentration may be much more difficult. For example, in a three-component fluid comprising an alcohol-sugar-water solution or mixture, a sugar concentration also affects a density of the three-component fluid, and alcohol content also affects, for example, a refractive index of the three-component fluid. More specifically, typically, density decreases with increasing alcohol content and increases with increasing sugar concentration. Conversely, refractive index of the three-component fluid increases with increasing alcohol and sugar.

Accordingly, there is a need for controlling a concentration of a component in a three-component mixture obtained by mixing two fluid sources.

SUMMARY

A method of controlling a concentration of a component of a three-component mixture obtained by mixing two fluid sources is provided. According to an embodiment, the method comprises measuring a fluid parameter of one of a first fluid comprising a first component and a third component of the three-component mixture, a second fluid comprising at least a second component of the three-component mixture, and the three-component mixture comprising the first component, the second component, and the third component. The method further comprises determining a concentration correlation parameter value based on the measured fluid parameter, measuring a density of one of the first fluid, the second fluid, and the three-component mixture, and controlling a concentration of one of the first component and the second component in the three-component mixture based on the measured density and concentration correlation parameter.

A three-component mixture system configured to control a concentration of a component of a three-component mixture obtained by mixing two fluid sources is provided. According to an embodiment, the three-component mixture system comprises a first fluid source configured to provide a first fluid comprising a first component and a third component of a three-component mixture, a second fluid source configured to provide a second fluid comprising a second component and the third component of the three-component mixture, and a three-component mixture container fluidly coupled to the first fluid source and the second fluid source and configured to receive the first fluid from the first fluid source and the second fluid from the second fluid source. The three-component mixture system further comprises a system electronics communicatively coupled with at least one of the first fluid source, the second fluid source, and the mixture container, the system electronics being configured to perform the method of the foregoing.

A method of controlling a concentration of a component in a three-component system by mixing two fluid sources is provided. According to an embodiment, the method comprises receiving, with a three-component mixture container, the first fluid comprising a first component and a third component of a three-component mixture and the second fluid comprising a reactant for the first component, reacting the first component and the reactant to produce a second component of the three-component mixture, determining a concentration correlation parameter of the three-component mixture, measuring a density of the three-component mixture, and controlling a concentration of one of the first component and the second component in the three-component mixture based on the measured density and concentration correlation parameter.

A three-component mixture system configured to control a concentration of a component of a three-component mixture obtained by mixing two fluid sources is provided. According to an embodiment, the three-component mixture system comprises a first fluid source configured to provide a first fluid comprising a first component and a third component of a three-component mixture, a second fluid source configured to provide a second fluid comprising a reactant for the first component, a three-component mixture container fluidly coupled to the first fluid source and the second fluid source and configured to receive the first fluid from the first fluid source and the second fluid from the second fluid source and a system electronics communicatively coupled with at least one of the first fluid source, the second fluid source, and the mixture container, the system electronics being configured to perform the methods described above.

ASPECTS

According to an aspect, a method of controlling a concentration of a component of a three-component mixture obtained by mixing two fluid sources comprises measuring a fluid parameter of one of a first fluid comprising a first component and a third component of the three-component mixture, a second fluid comprising at least a second component of the three-component mixture, and the three-component mixture comprising the first component, the second component, and the third component. The method further comprises determining a concentration correlation parameter value based on the measured fluid parameter, measuring a density of one of the first fluid, the second fluid, and the three-component mixture, and controlling a concentration of one of the first component and the second component in the three-component mixture based on the measured density and concentration correlation parameter.

Preferably, controlling the concentration of one of the first component and the second component in the three-component mixture based on the measured density and concentration correlation parameter comprises calculating the concentration of one of the first component and the second component in the three-component mixture based on the measured density, determining a desired concentration of the one of the first component and the second component in the three-component mixture, and comparing the calculated concentration of the one of the first component and the second component in the three-component mixture with the desired concentration of the one of the first component and the second component in the three-component mixture.

Preferably, the second fluid further comprises the third component so as to be comprised of the second component and the third component.

Preferably, the first component is a first solute, the second component is a second solute, and the third component is a solvent.

Preferably, the third component comprising the solvent comprises the third component comprising water.

Preferably, the first fluid comprises a sugar-water solution wherein the first component comprises sucrose and the second fluid comprises an alcohol-water solution wherein the second component comprises ethyl alcohol.

Preferably, the measuring the density of the one of the first fluid and the second fluid comprises measuring the density of the first fluid with a first vibratory meter and the density of the second fluid with a second vibratory meter.

Preferably, the method further comprises measuring a flow rate of at least one of the first fluid and the second fluid with at least one of the first vibratory meter and the second vibratory meter.

Preferably, measuring the flow rate of the at least one of the first fluid and the second fluid comprises measuring a mass flow rate of at least one of the first fluid and the second fluid.

Preferably, determining the concentration correlation parameter based on the measured density comprises determining one of a density-to-concentration factor value and an indirect concentration parameter value.

Preferably, the indirect concentration parameter value is one of a refractive index value and a velocity of sound value of the three-component fluid.

Preferably, the measured fluid parameter of one of the first fluid, the second fluid, and the three-component fluid comprises one of a density, a refractive index, and a velocity of sound of the one of the first fluid, the second fluid, and the three-component fluid.

Preferably, the method further comprises initial steps of providing the first fluid comprised of the first component and the third component of the three-component mixture, providing the second fluid comprised of the at least a second component of the three-component mixture, and mixing the first fluid and the second fluid to obtain the three-component mixture.

Preferably, at least one of the measured density and the measured fluid parameter is a temperature corrected measured value.

According to an aspect, a three-component mixture system configured to control a concentration of a component of a three-component mixture obtained by mixing two fluid sources comprises a first fluid source configured to provide a first fluid comprising a first component and a third component of a three-component mixture, a second fluid source configured to provide a second fluid comprising a second component and the third component of the three-component mixture, and a three-component mixture container fluidly coupled to the first fluid source and the second fluid source and configured to receive the first fluid from the first fluid source and the second fluid from the second fluid source. The three-component mixture system further comprises a system electronics communicatively coupled with at least one of the first fluid source, the second fluid source, and the mixture container, the system electronics being configured to perform the methods of the foregoing.

Preferably, the system electronics is further configured to receive the fluid parameter of the one of the first fluid, the second fluid, and the three-component mixture from a corresponding one of both the first fluid source and the second fluid source and the mixture container.

According to an aspect, a method of controlling a concentration of a component in a three-component system by mixing two fluid sources comprises receiving, with a three-component mixture container, the first fluid comprising a first component and a third component of a three-component mixture and the second fluid comprising a reactant for the first component, reacting the first component and the reactant to produce a second component of the three-component mixture, determining a concentration correlation parameter of the three-component mixture, measuring a density of the three-component mixture, and controlling a concentration of one of the first component and the second component in the three-component mixture based on the measured density and concentration correlation parameter.

Preferably, determining a concentration correlation parameter of the three-component mixture comprises measuring a fluid parameter of the three-component mixture and determining the concentration correlation parameter of the three-component mixture based on the measured fluid parameter of the three-component mixture.

Preferably, controlling the concentration of one of the first component and the second component in the three-component mixture based on the measured density and concentration correlation parameter comprises calculating the concentration of one of the first component and the second component in the three-component mixture based on the measured density, determining a desired concentration of the one of the first component and the second component in the three-component mixture, and comparing the calculated concentration of the one of the first component and the second component in the three-component mixture with the desired concentration of the one of the first component and the second component in the three-component mixture.

Preferably, controlling the concentration of the one of the first component and the second component in the three-component mixture based on the measured density and the concentration correlation parameter comprises controlling a reaction time of the first component and the reactant for the first component.

Preferably, controlling a concentration of the one of the first component and the second component in the three-component mixture based on the measured density and concentration correlation parameter comprises controlling a mass flow rate of at least one of the first fluid and the second fluid.

Preferably, the method further comprises controlling at least one of the reaction time of the first component and the reactant for the first component and the mass flow rate of the at least one of the first fluid and the second fluid based on the comparison of the calculated concentration of the one of the first component and the second component in the three-component mixture with the desired concentration of the one of the first component and the second component in the three-component mixture.

Preferably, the second fluid further comprises the third component so as to be comprised of the reactant for the first component and the third component.

Preferably, the first component comprises methanol, the reactant comprises oxygen, the second component comprises formaldehyde, and the third component comprises water.

Preferably, the three-component mixture container comprises a continuous flow fixed reaction volume reactor.

Preferably, the continuous flow fixed reaction volume reactor comprises one of a plug flow reactor and a continuous stirred tank reactor.

Preferably, the method further comprises providing the first fluid comprising the first component and the third component of the three-component mixture to the three-component mixture container and providing the second fluid comprising the reactant for the first component to the three-component mixture system.

Preferably, at least one of the measured density and the measured fluid parameter is a temperature corrected measured value.

According to an aspect, a three-component mixture system configured to control a concentration of a component of a three-component mixture obtained by mixing two fluid sources comprises a first fluid source configured to provide a first fluid comprising a first component and a third component of a three-component mixture, a second fluid source configured to provide a second fluid comprising a reactant for the first component, a three-component mixture container fluidly coupled to the first fluid source and the second fluid source and configured to receive the first fluid from the first fluid source and the second fluid from the second fluid source and a system electronics communicatively coupled with at least one of the first fluid source, the second fluid source, and the mixture container, the system electronics being configured to perform the methods described above.

Preferably, the system electronics is further configured to receive the fluid parameter of the three-component mixture from the three-component mixture container.

Preferably, the three-component mixture container comprises a continuous flow fixed reaction volume reactor.

Preferably, the continuous flow fixed reaction volume reactor comprises one of a plug flow reactor and a continuous stirred tank reactor.

BRIEF DESCRIPTION OF THE DRAWINGS

The same reference number represents the same element on all drawings. It should be understood that the drawings are not necessarily to scale.

FIG. 1 shows three-component mixture system 100 for controlling a concentration of a component in a three-component mixture obtained by mixing two fluid sources.

FIG. 2 shows a block diagram of the dual flow meter system 5.

FIG. 3 shows a block-pipeline view of the three-component mixture system 100 described above with reference to FIGS. 1 and 2.

FIGS. 4 and 5 show a three-component mixture system 400, 500 for controlling a concentration of a component in a three-component mixture obtained by mixing two fluid sources.

FIG. 6 shows a concentration correlation parameter graph 600 for a three-component mixture.

FIGS. 7 and 8 show alcohol and sugar concentration coordinate graphs 700, 800 including refractive index and density functional relationships to alcohol and sugar content.

FIG. 9 shows a method 900 of controlling a concentration of a component in a three-component mixture obtained by mixing two fluid sources.

FIG. 10 shows a block-pipeline view of a three-component mixture system 1000.

FIG. 11 shows a concentration correlation parameter graph 1100 for a three-component mixture having reactive components.

FIG. 12 shows a method 1200 of controlling a concentration of a component in a three-component mixture obtained by mixing two fluid sources.

DETAILED DESCRIPTION

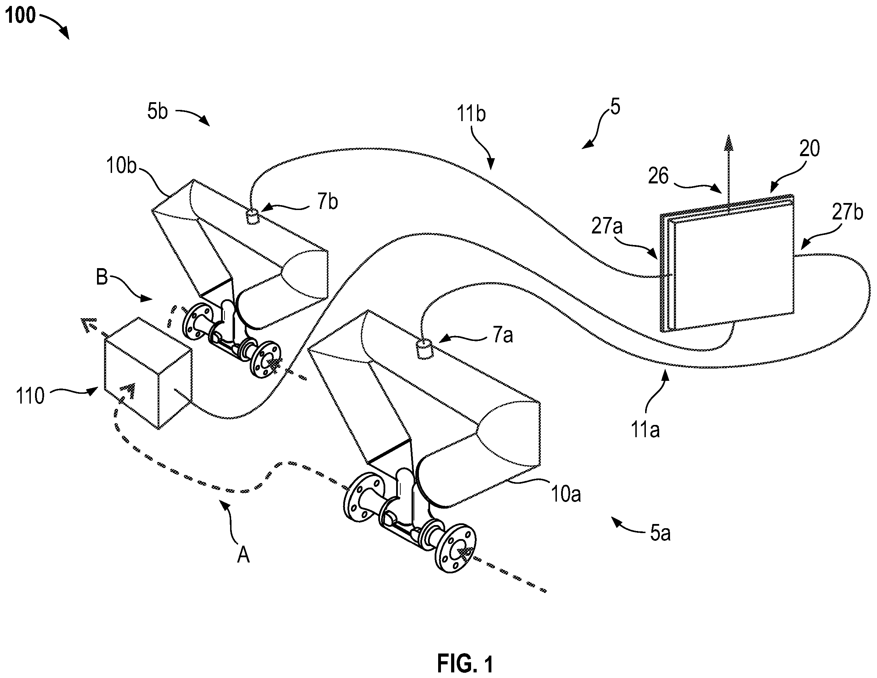

FIGS. 1 - 12 and the following description depict specific examples to teach those skilled in the art how to make and use the best mode of embodiments of controlling a concentration of a three-component mixture obtained by mixing two fluid sources. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of controlling the concentration of the component in the three-component mixture obtained by mixing the two fluid sources. As a result, the embodiments described below are not limited to the specific examples described below, but only by the claims and their equivalents.

**Two fluid source mixing system**

**FIG. 1** shows three-component mixture system 100 for controlling a concentration of a component in a three-component mixture obtained by mixing two fluid sources. As shown in FIG. 1, the three-component mixture system 100 includes a mixer 110 and a dual flow meter system 5. As shown in FIG. 1, the dual flow meter system 5 includes a first flow meter 5a and a second flow meter 5b. The first and second flow meter 5a, 5b are respectively comprised of the system electronics 20 and the first and second sensor assembly 10a, 10b. The dual flow meter system 5 is shown as providing a first fluid from a first fluid source A and a second fluid from a second fluid source B to the mixer 110. The mixer 110 may mix the first fluid and the second fluid to provide a three-component mixture or fluid.

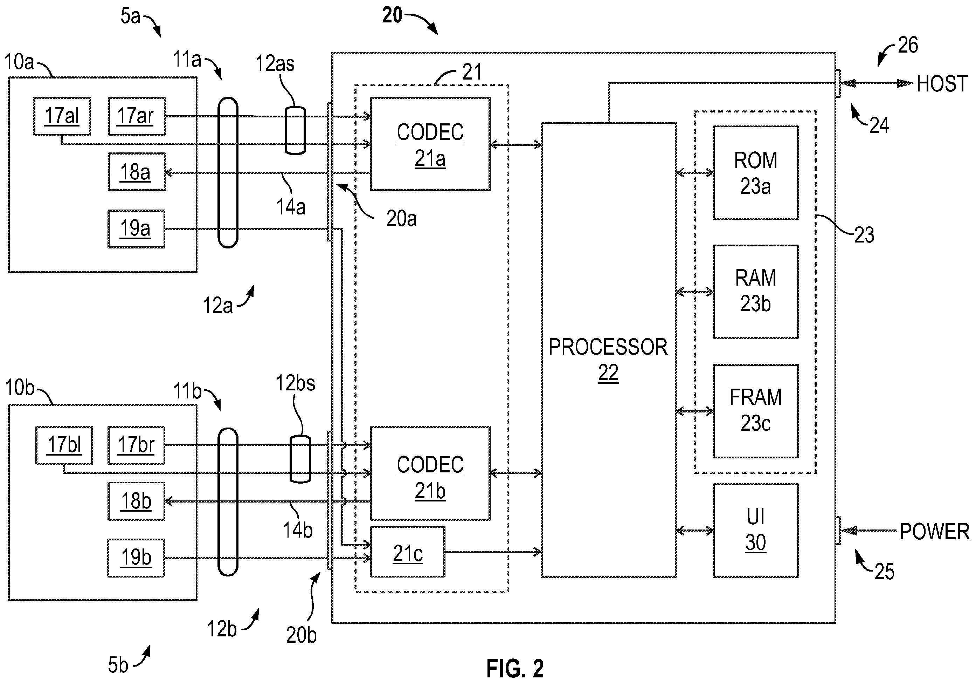

The system electronics 20 is communicatively coupled to the first and second sensor assembly 10a, 10b via a first and second set of leads 11a, 11b. The first and second set of leads 11a, 11b are coupled (e.g., attached, affixed, etc.) to a first and second communication port 27a, 27b on the system electronics 20. The first and second set of leads 11a, 11b are also coupled to the first and second sensor assembly 10a, 10b via a first and second communication port 7a, 7b on the first and second sensor assembly 10a, 10b. The system electronics 20 is configured to provide information over host channel 26 to a host. The first and second sensor assembly 10a, 10b are shown with a case that surrounds flow tubes. The system electronics 20 and first and second sensor assembly 10a, 10b are described in more detail in the following with reference to FIG. 2.

Still referring to FIG. 1, the fluid flow of the first and second fluid source A, B are shown as dashed lines illustrating the fluid flows. The first and second flow meter 5a, 5b can be used to, for example, calculate a net or total flow of each of the first and second fluid source A, B. The first and second flow meter 5a, 5b and/or the mixer 110 can be used to calculate a net or total fluid flow from mixing a first fluid source and a second fluid source. For example, the dual flow meter system 5 may be employed in a mixing application where each of the first and second fluid source A, B is supplied from a tank having, for example, a fluid. A net or total fluid flow through first sensor assembly 10a can be added to a net or total fluid flow through the second sensor assembly 10b to determine a mass of a three-component fluid. As can also be appreciated, in the described and other embodiments, the calculations can be performed by the system electronics 20, which is described in more detail in the following.

FIG. 2 shows a block diagram of the dual flow meter system 5. As shown in FIG. 2, the dual flow meter system 5 includes the first and second sensor assembly 10a, 10b and the system electronics 20 described above with reference to FIG. 1. The first and second sensor assembly 10a, 10b are communicatively coupled with the system electronics 20. The system electronics 20 is shown as including a signal processing circuit 21 that is communicatively coupled with the first and second sensor assembly 10a, 10b and a processor 22. The processor 22 is communicatively coupled with the signal processing circuit 21 and one or more memories 23, which is illustrated by a dashed line. The system electronics 20 also includes a communications port 24 and a power port 25 and a host channel 26 that communicates via the communications port 24.

As shown in FIG. 2, the first and second sensor assembly 10a, 10b respectively include first and second left pick-off sensors 17al, 17bl and first and second right pick-off sensors 17ar, 17br as well as a first and second driver 18a, 18b and a first and second temperature sensor 19a, 19b. The first and second sensor assembly 10a, 10b are respectively communicatively coupled to the system electronics 20 via first and second sensor signals 12a, 12b, which are comprised of a first set of leads 11a and a second set of leads 11b. The first and second sensor signals 12a, 12b are respectively shown as coupled to the system electronics 20 via a first and second sensor interface 20a, 20b. The first and second sensor signals 12a, 12b are shown as being respectively comprised of first and second pick-off sensor signals 12as, 12bs and first and second drive signals 14a, 14b. The first and second pick-off sensor signals 12as, 12bs and the first and second drive signals 14a, 14b are respectively received from and provided by a signal processing circuit 21.

As shown in FIG. 2, the signal processing circuit 21 is shown as a dashed line box surrounding a first coding/decoding circuit (CODEC) 21a and a second CODEC 21b. Also shown is a temperature signal digitizer 21c that digitizes temperature signals provided by the first and second temperature sensor 19a, 19b. Although not explicitly depicted, it is understood that the signal processing circuit 21 may include any signal processing related circuits, including those that do not convert between digital and analog signals. For example, the signal processing circuit 21 may include signal conditioning circuits, modulation related circuits, and/or the like. The signal processing circuit 21 may convert between analog and digital circuits so that the first and second sensor assembly 10a, 10b may communicate with the processor 22.

The one or more memories 23 is shown as comprised of a read only memory (ROM) 23a, a random-access memory (RAM) 23b, and a ferromagnetic random-access memory (FRAM) 23c, although more or fewer and/or alternative suitable memories may be employed. As can be seen, the ROM 23a, RAM 23b, and FRAM 23c are each communicatively coupled to the processor 22. The processor 22 may be comprised of one or more processors, memories, signal processing circuits, and/or the like, that is able to call into memory and process programs that are stored in, for example, the one or more memories. The programs may calculate, for example, properties of the fluid flowing through the first and second sensor assembly 10a, 10b.

The first and second flow meter 5a, 5b can be initially calibrated and a flow calibration factor FCF, along with a zero offset $\Delta T_0$, can be generated. In use, the flow calibration factor FCF can be multiplied by the time delay $\Delta T$ measured by the left and right pick-off sensors 17al, 17bl and 17ar, 17br minus the zero offset $\Delta T_0$ to generate a mass flow rate $\dot{m}$. An example of a mass flow rate equation utilizing a flow calibration factor FCF and a zero offset $\Delta T_0$ is described by Equation [1]:

$$\dot{m} = FCF(\Delta T_{measuired} - \Delta T_0) \qquad [1]$$

where:

$\dot{m}$ is a mass flow rate;
$FCF$ is a flow calibration factor;
$\Delta T_{measuired}$ is a measured time delay; and
$\Delta T_0$ is an initial zero offset.

The temperature sensors 19a, 19b are mounted to conduits of the first and second sensor assembly 10a, 10b to continuously measure the temperature of the conduits of the first and second sensor assembly 10a, 10b. The temperature of the conduits of the first and second sensor assembly 10a, 10b and hence the voltage appearing across the temperature sensors 19a, 19b for a given current is governed by the temperature of the material passing through the conduits of the first and second sensor assembly 10a, 10b. The temperature dependent voltages appearing across the temperature sensors 19a, 19b may be used by the system electronics 20 to compensate for the change in elastic modulus of the conduits of the first and second sensor assembly 10a, 10b due to any changes in conduit temperature. In the embodiment shown, the temperature sensors 19a, 19b are resistive temperature detectors (RTD). Although the embodiments described herein employ RTD sensors, other temperature sensors may be employed in alternative embodiments, such as thermistors, thermocouples, etc.

As to density, a resonance frequency at which each conduit may vibrate may be a function of the square root of a spring constant of the conduit divided by the total mass of the conduit having a material. The total mass of the conduit having the material may be a mass of the conduit plus a mass of a material inside the conduit. The mass of the material in the conduit is directly proportional to the density of the material. Therefore, the density of this material may be proportional to the square of a period at which the conduit containing the material oscillates multiplied by the spring constant of the conduit. Hence, by determining the period at which the conduit oscillates and by appropriately scaling the result while also including temperature effects on the spring constant, an accurate measure of the density of the material contained by the conduit can be obtained. Accordingly, the density value herein referred to may be a temperature corrected density value in that a temperature is measured and the measured temperature is used to correct a raw uncorrected density value. The system electronics 20 can determine the period or resonance frequency using the sensor signals and/or the drive signal.

The system electronics 20 receives the left and right sensor signals from the first and second left and right pick-off sensors 17al, 17ar and 17bl, 17br and the temperature signals from the first and second temperature sensor 19a, 19b via the first and second set of leads 11a, 11b. The system electronics 20 provides a drive signal to the driver 18a, 18b and vibrates the conduits of the first and second sensor assembly 10a, 10b. The system electronics 20 processes the left and right sensor signals and the temperature signals to compute the mass flow rate and the density of the material passing through the first and/or second sensor assembly 10a, 10b. This information, along with other information, is applied by system electronics 20 over host channel 26 as a signal.

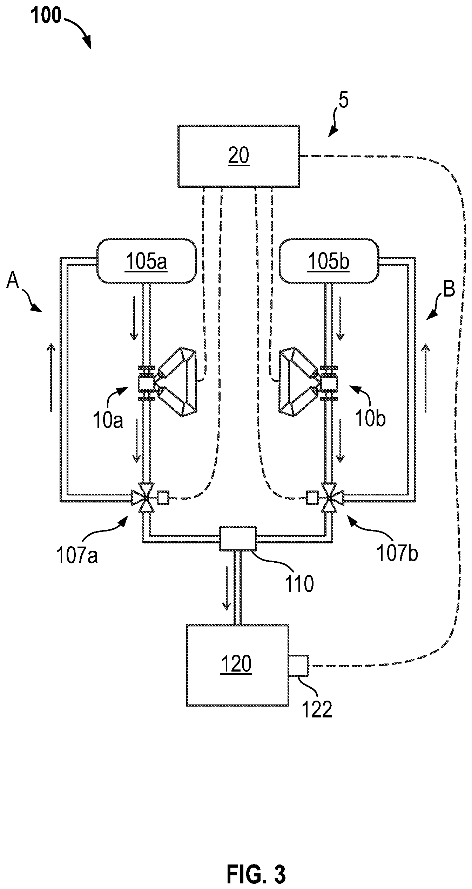

As can be appreciated, although the dual flow meter system 5 shown in FIGS. 1 and 2 includes only two sensor assemblies 10a, 10b, the dual flow meter system 5 may be employed in systems that include more than two sensor assemblies. For example, a system electronics may be configured to communicate with three or more sensor assemblies, where two of the sensor assemblies measure a respective component of a two-component mixture of a fluid source. Accordingly, a net mass flow of a fluid source for a three-component mixture may be calculated by summing the net mass flow of each of the two components of the fluid source. Additionally, or alternatively, a system electronics may be configured to additionally communicate with a third sensor assembly that measures fluid parameters of a three-component mixture. In these and other embodiments, a three-component mixture may be mixed from two fluid sources, as is explained in more detail in the following with reference to FIG. 3.

**FIG. 3** shows a block-pipeline view of the three-component mixture system 100 described above with reference to FIGS. 1 and 2. As shown in FIG. 3, the three-component mixture system 100 includes the dual flow meter system 5. As shown in FIG. 3, the dual flow meter system 5 includes the first and second sensor assembly 10a, 10b and the system electronics 20. The first and second sensor assembly 10a, 10b are shown as communicatively coupled with the system electronics 20. The three-component mixture system 100 is also shown as being respectively comprised of a first and second fluid tank 105a, 105b that respectively contain a first fluid and a second fluid. The first and second sensor assembly 10a, 10b are fluidly coupled to the first and second fluid tank 105a, 105b. The first and second sensor assembly 10a, 10b are also respectively configured to receive the first and second fluid from the first and second fluid tank 105a, 105b. The first and second sensor assembly 10a, 10b are also fluidly coupled to the first and second fluid control valve 107a, 107b, which are respectively fluidly coupled to the first and second fluids to the first and second fluid tank 105a, 105b to provide a feedback loop. The first and second fluid control valve 107a, 107b are further fluidly coupled to a mixer 110, which in turn is fluidly coupled to a three-component mixture container 120. The mixer 110 mixes the first and second fluid and provides the mixture to the three-component mixture container 120. The three-component mixture container 120 accordingly receives the three-component mixture from the mixer 110. The first and second fluid control valve 107a, 107b are further fluidly coupled to the mixer 110, which is communicatively coupled to the system electronics 20 and fluidly coupled to the three-component mixture container 120. In particular, the three-component mixture container 120 includes a density sensor 122 which is communicatively coupled to the system electronics 20. The three-component mixture container 120 is configured to contain a three-component fluid. The density sensor 122 is configured to measure a density of the three-component fluid contained by the three-component mixture container 120.

As shown, fluid flows of the first and second fluid respectively provided by the first and second fluid tank 105a, 105b are illustrated by arrows. As can be appreciated from the direction of the arrows, the first and second fluid respectively flow from the first and second fluid tank 105a, 105b to the first and second sensor assembly 10a, 10b. It should be appreciated that the first and second fluid tank 105a, 105b may be any suitable fluid supply, such as, for example a reservoir, pipeline, pump, valve, and/or the like. Accordingly, the first and second fluid tank 105a, 105b may contain and provide the first and second fluid at a constant or variable concentration. The first and second tank 105a, 105b may also provide information about the first and second fluid, such as a concentration, temperature, composition, and/or the like. The information may be provided to the system electronics 20.

The first and second sensor assembly 10a, 10b respectively receive the first and second fluid from the first and second fluid tank 105a, 105b. The first and second fluid control valve 107a, 107b are configured to respectively receive the first and second fluid from the first and second sensor assembly 10a, 10b and provide the first and second fluid to their respective first and second fluid tank 105a, 105b and the three-component mixture container 120, depending on a valve position status of the first and second fluid control valve 107a, 107b. The first and second fluid control valve 107a, 107b may be any suitable valve, such as variable flow rate, open/closed, and/or the like. The first and second fluid control valve 107a, 107b may receive and/or provide information related to the first and second fluid control valve and/or the first and second fluid. The first and second fluid control valve 107a, 107b may be controlled using any suitable actuation method, such as electrical, pneumatic, mechanical, a combination thereof, etc.

As discussed above, the three-component mixture container 120 may receive and contain a three-component fluid from the mixer 110. For example, the three-component mixture container 120 may represent a tank, pipeline, bladder, and/or the like. Accordingly, where the three-component mixture container 120 represents a pipeline, a volume of a three-component fluid in the three-component mixture container 120 may be a volume flow rate of the three-component fluid. That is, the volume of the three-component fluid may be divided by units of time. Similarly, where a volume of the three-component mixture container 120 is discretized into per unit volume values, the volume of the three-component fluid may be expressed on a per unit volume basis. The three-component mixture container 120 may include additional features, such as measurement, mixing, or the like type of devices.

With reference to FIG. 3, the first fluid provided by the first fluid tank 105a may be comprised of a first and third component of the three-component fluid. The second fluid may be comprised of a second component and the third component. The third component may be a solvent for the first and second component. Accordingly, the first and second component may be solutes that are dissolved in the third component. For example, the first component may be an alcohol, such as ethanol that is consumed from beverages, and the second component may be sugar, such as sucrose, that is used to sweeten the beverage. In this example, the alcohol and the sugar may be dissolved in water. Accordingly, the first fluid may be comprised of alcohol and water and the second fluid may be comprised of sugar and water, although any suitable arrangement may be employed. The concentrations of the first fluid and the second fluid may or may not be at a constant value and may or may not be known and/or controlled.

As can be appreciated and is discussed above, the amount of the first component relative to an overall amount of the first fluid may be defined as a first fluid concentration. For example, the concentration of the first component in the first fluid may be defined as a ratio of a mass of the first component relative to a sum of the mass of the first component and the third component. A net mass flow may be a net or total flow of a fluid over a period of time. The net mass flow may be obtained by integrating instantaneous mass flow rates, while, for example, the three-component mixture container 120 is filled from an empty state to a final filled state. A mass of a component may be a total mass value of one of the three-components of the three-component mixture. The following Table 1 illustrates variables and their respective definitions that may be relied on in this Specification.

Table 1. Variables and their definitions, generally related to components in general or an alcohol-sugar-water mixture.

| | |
|---|---|
| $\dot{m}_A$ | mass flow rate of a first fluid source $A$ |
| $\dot{m}_B$ | mass flow rate of a second fluid source $B$ |
| $\dot{m}_{mix}$ | mass flow rate of a mixture (e.g., three-component mixture) of the first fluid source $A$ and the mass flow rate of the second fluid source $B$ |
| $\dot{m}_{sugar\text{-}water}$ | mass flow rate of a sugar-water source - mass flow rate of the sugar-water solution |

(continued)

| | |
|---|---|
| $\dot{m}_{alcohol\text{-}water}$ | mass flow rate of an alcohol-water source - mass flow rate of the alcohol-water solution |
| $\dot{m}_{sugar}$ | mass flow rate of sugar from the sugar-water source |
| $\dot{m}_{alcohol}$ | mass flow rate of alcohol from the alcohol-water source |
| $\dot{m}_{water\,[alcohol\text{-}water]}$ | mass flow rate of water from the alcohol-water source |
| $\dot{m}_{water\,[sugar\text{-}water]}$ | mass flow rate of water from the sugar-water source |
| $\dot{m}_{waterTotal}$ | mass flow rate of water from both sources - i.e., a total mass flow rate of water |
| $NetMF_A$ | net or total mass flow from the first fluid source A. For example, if the first fluid source A is an alcohol-water source, then the $NetMF_A$ is a net or total mass flow of the alcohol-water solution from the alcohol-water source |
| $NetMF_B$ | net or total mass flow from the second fluid source B. For example, if the second fluid source B is a sugar-water source, then the $NetMF_B$ is a net or total mass flow of the sugar-water solution from the second fluid source |
| $M_{alcoholMix}$ | mass of alcohol in a three-component mixture |
| $M_{sugarMix}$ | mass of sugar in a three-component mixture |
| $M_{TotalMix}$ | mass of a three-component mixture |
| $\rho_A$ | density of a first fluid source |
| $\rho_B$ | density of a second fluid source |
| $\rho_{sugar\text{-}water}$ | density of a sugar-water solution |
| $\rho_{alcohol\text{-}water}$ | density of an alcohol-water solution |
| $C_{1A}$ | concentration of a first component of a three-component mixture, the first component being in the first fluid source A |
| $C_{2B}$ | concentration of a second component in a three-component mixture, the second component being in a second fluid source B |
| $C_{alcoholA}$ | concentration of alcohol in a first fluid source A or an alcohol-water source |
| $C_{sugarB}$ | concentration of sugar in a second fluid source B or a sugar-water source |
| $C_{alcoholMix}$ | concentration of alcohol in a three-component mixture (typically %ABV) |

In the above variables, the mass variable $\dot{m}$ can be replaced by a volume variable V for equivalent volume related terms. For example, the mass flow rate of the sugar-water solution $\dot{m}_{sugar\text{-}water}$ may be restated as a volume flow rate of the sugar-water solution $\dot{V}_{sugar\text{-}water}$. Similarly, the mass flow rate of water from the sugar-water solution $\dot{m}_{water[sugar\text{-}water]}$ may be restated as a volume flow rate of water from the sugar-water solution $\dot{V}_{water\,[sugar\text{-}water]}$.

Additional, or alternative, to correcting for the effects of temperature on the spring constant of a conduit, the density value may be corrected for thermal expansion effects of the fluid. As the temperature of the fluid increases, density decreases without the concentration changing. Accordingly, the system electronics 20 can apply a correction factor to a measured density value obtained at a non-reference temperature (e.g., 42 °C) to obtain a reference density value. The reference density value may be a density value at a reference temperature (e.g., 20 °C). For example, the reference density value may be determined by applying a fit over density over temperature curves at different concentration. Then a concentration versus density relationship may be used at reference temperature curve to determine the concentration for a given density at reference temperature or reference density value. This and other processes to determine a concentration value at a reference density value is described in International Application Publication Number WO 2015/010072 to Wheeler having an international filing date of July 18, 2014 and assigned to Micro Motion, Inc., which is herein incorporated by reference in its entirety.

Accordingly, the density values of the densities discussed in the above Table 1 may be temperature corrected density values that are corrected for various temperature effects. For example, a raw or uncorrected density value may be obtained. The system electronics 20 may correct the raw or uncorrected density value to an intermediate temperature corrected density value. Additionally, or alternatively, the system electronics 20 may correct the raw or uncorrected density value or the intermediate temperature corrected density value to a temperature corrected density value. That is, the temperature corrected density value may be viewed as a value that is employed to determine a concentration of a component, even if the value is not corrected for all possible temperature effects.

As discussed above, the three-component mixture container 120 may be filled with a three-component fluid where it is desirable to know a concentration of one of the components in the three-component fluid. By way of illustration, with the example of an alcohol-sugar-water mixture, it may be desirable to know the alcohol concentration $C_{alcoholMix}$ in the alcohol-sugar-water mixture, which may alternatively be referred to as mixture alcohol concentration $C_{alcoholMix}$. The mixture alcohol concentration $C_{alcoholMix}$ may be defined by the following Equation [2]:

$$C_{alcoholMix} = \frac{M_{alcoholMix}}{(M_{alcoholMix} + M_{sugarMix} + M_{waterMix})}; \qquad [2]$$

where:

$M_{alcoholMix}$ is a total mass of alcohol in the three-component mixture;
$M_{sugarMix}$ is a total mass of sugar in the three-component mixture; and
$M_{waterMix}$ is a total mass of water in the three-component mixture.

Defined using mass flow rates of the first fluid source A and the second fluid source B, the terms of Equation [2] may be restated as:

$$M_{alcoholMix} = NetMF_A * C_{alcoholA}; \qquad [3]$$

$$M_{sugarMix} = NetMF_B * C_{sugarB}; \text{ and} \qquad [4]$$

$$M_{waterMix} = NetMF_A * (1 - C_{alcoholA}) + NetMF_B * (1 - C_{sugarB}); \qquad [5]$$

where the terms are defined in Table 1, the first fluid source $A$ is an alcohol-water source, and the second fluid source B is a sugar-water source.

As can be appreciated from Equation [2], dividing the mass of an alcohol in a three-component mixture $M_{alcoholMix}$ by the sum of the total mass of alcohol in the three-component mixture $M_{alcoholMix}$, the total mass of sugar in the three-component mixture $M_{sugarMix}$, and the total mass of water in the three-component mixture $M_{waterMix}$ yields a concentration of alcohol as a ratio of mass values. The alcohol concentration $C_{alcoholMix \text{ can be}}$ converted to a ABV value using various tables and formulas, such as, for example the relationship of $ABV \cdot 0.8 = ABW$, where $ABW$ is alcohol by weight, although any suitable relationship may be employed. For example, relationships that use density values of the water, alcohol, and/or sugar, measured, assumed, predetermined, or the like, in the three-component mixture can be employed.

As can be appreciated, the net or total mass flow from the first fluid source $NetMF_A$, which is an alcohol-water source, may be determined by summing over time the mass flow rate of the first fluid source $\dot{m}_A$. Referring to the three-component mixture system 100 of FIG. 3, the first sensor assembly 10a can measure the mass flow rate of the first fluid source $\dot{m}_A$. Similarly, the net or total mass flow from the second fluid source $NetMF_B$ may be measured using the second sensor assembly 10b. However, it may be desirable to reduce the number of mass flow meters used to determine the concentration of alcohol. To this end, it can be appreciated that the foregoing Equations [3]-[5] can be reformulated in various ways to suit the particular application.

For example, in embodiments alternative to the three-component mixture system 100 shown in FIG. 3, a density of the first and/or second fluid may be measured along with a mass flow rate of one of the first and second fluid sources A, B. Additionally, or alternatively, a density, refractive index, and/or other value that is correlated with a concentration of at least one of the components in the three-component mixture may be employed. In addition, other parameters may be employed. For example, referring to FIG. 3, the first sensor assembly 10a can measure an alcohol content of the first fluid from the first fluid source A in percent alcohol by volume terms (%ABV) and the second sensor assembly 10b can measure a sugar content of the second fluid from the second fluid source B in degrees Brix (°Bx). Degrees Brix °Bx may be defined as 1 gram of sucrose per 100 grams of the second fluid. The second fluid may be a sugar-water solution. As can also be appreciated, various parameters of the first fluid and second fluid can be adjusted to achieve a desired alcohol concentration in the three-component mixture. The following describes exemplary illustrations of other parameters and approaches alternative to measuring fluid flows of the first and second fluid sources.

Alternative parameters

In an example of alternative parameters that use the three-component mixture system 100 described with reference to FIG. 3, it may be desirable to have a three-component mixture in the three-component mixture container 120 comprising 40 %ABV and 15 °Brix. The initial conditions may be the first fluid tank 105a containing an alcohol-water fluid with 67.707 %ABV flowing at 120.51 kg/min with a temperature of 22.3 °C. At the same initial conditions, the second fluid tank 105b may have a sugar-water fluid with 32.25 °Brix flowing at 34.72 kg/min with a temperature of 22.3 °C. If the initial conditions were not adjusted, the three-component mixture in the three-component mixture container 120 would have an %ABV of 43.474 and a °Brix of 7.16. To achieve the desired three-component mixture comprising 40 %ABV and 15 °Brix, the system electronics 20 may adjust the sugar-water fluid to have the conditions of 53.44 °Brix of sugar, a 25.869 kg/min flow rate, and a temperature of 22.3 °C. As the foregoing example illustrates, an advantage of using two flow meters over alternative configurations without flow meters is that both fluid density and mass flow rate can be measured and controlled to achieve the %ABV desired °Brix.

By way of illustration, in the foregoing example, the steps for the second fluid supply B could be to (1) set an initial flow rate (e.g., best guess) of the sugar-water fluid, (2) measure a density of the sugar-water fluid to determine a density value of the sugar-water fluid, (3) use a sugar table relating °Brix with density to convert the density value to a °Brix value, (4) calculate a sugar flow rate in, for example, g/min, and (5) determine a water volume flow rate. For the first fluid supply A, the steps can be (1) set a flow rate of the alcohol-water fluid, (2) measure a density of the alcohol-water fluid to determine a density value of the alcohol-water fluid, (3) use an alcohol table to convert the density value to a %ABV value, and (4) determine a water and alcohol volume using the %ABV. After the foregoing steps are performed, a total volume or mass of: water provided by the first fluid source A and the second fluid source B, alcohol provided by the first fluid source A, and sugar provided by the second fluid source B can be determined and known.

Accordingly, a final concentration value of the sugar and alcohol can be solved. For example, we can begin with a concentration equation that relates a beginning concentration and volume to a final concentration and volume:

$$C_1 V_1 = C_2 V_2; \qquad [6]$$

where:

$C_1$ is a beginning concentration of a component in a fluid or solution;
$V_1$ is a beginning volume of the fluid or solution having the component;
$C_2$ is a final concentration of the component in the fluid or solution; and
$V_2$ is a final volume of the fluid or solution having the component.

In the subject matter of solutes and solutions, the equation $C_1 V_1 = C_2 V_2$ refers to the principle of conservation of mass. It states that the total amount of solute in a solution remains constant, even when the volume of the solution changes. Equation [6] can be read as follows: the concentration $C$ of solute in a solution multiplied by its volume $V$ is equal to the concentration $C$ of solute in a different solution multiplied by its volume $V$. Equation [6] can be used to calculate the concentration of a solution before and after a volume change.

Employing %$ABV$ as a concentration for the concentration terms $C_1$, $C_2$, Equation [6] may be rewritten as follows:

$$\%ABV_{Final} = \frac{(\%ABV_{Begin} \cdot \dot{V}_{alcohol-water})}{(\dot{V}_{alcohol-water} + \dot{V}_{water\,[sugar-water]})}; \quad [7]$$

where:

$\%ABV_{Begin}$ is the beginning concentration of alcohol in an alcohol-sugar-water, or three-component, mixture or blend;
$\dot{V}_{alcohol-water}$ is a volume flow rate of the alcohol-water solution from the alcohol-water source;
$\dot{m}_{water\,[sugar-water]}$ is a volume flow rate of water from the sugar-water source; and
$\%ABV_{Final}$ is the final concentration of alcohol in an alcohol-sugar-water, or three-component, mixture or blend.

It should be understood that the volume of sugar from the sugar-water source is not accounted for in the above equation because the alcohol by volume $\%ABV_{Final}$ is defined as the volume of alcohol divided by the total liquid volume after the dissolved solids have been removed.

Similarly, where the component is sugar and the concentration terms $C_1$ and $C_2$ is measured in degrees *Brix,* Equation [6] may be:

$$Brix_{Final} = \frac{\dot{m}_{sugar}\,(g/l)}{(\dot{m}_{alcohol-water} + \dot{m}_{sugar-water})} \cdot 100. \quad [8]$$

where:

$\dot{m}_{sugar}(g/l)$ is mass flow rate of sugar, which is in units of grams-per-liter ($g/l$);

$\dot{m}_{alcohol-water}$ is the mass flow rate of the alcohol-water solution from the alcohol-water source;

$\dot{m}_{sugar-water}$ is the mass flow rate of the sugar-water solution from the sugar-water source; and

$Brix_{Final}$ is the concentration of sugar in the alcohol-sugar-water mixture or final three-component mixture in degrees Brix.

The foregoing example uses a measured density along with a scalar value, or numerical scale that relates a density value to a concentration value of a solute of each of the first and second fluid source A, B. The scalar value is a concentration correlation parameter as is described in more detail in the following. The scale or concentration correlation parameter relies on a density value of the first and second fluid source A, B being correlated with the concentration value of a solute or component in the first and second fluid source A, B. Other approaches of using a measured density value may be employed to determine and control a concentration of a component in a three-component mixture, such as using a measured density value and a concentration correlation parameter related to the three-component mixture, as will be described in more detail in the following after discussing alternative three-component mixture systems.

Alternative arrangements of a three-component mixture system

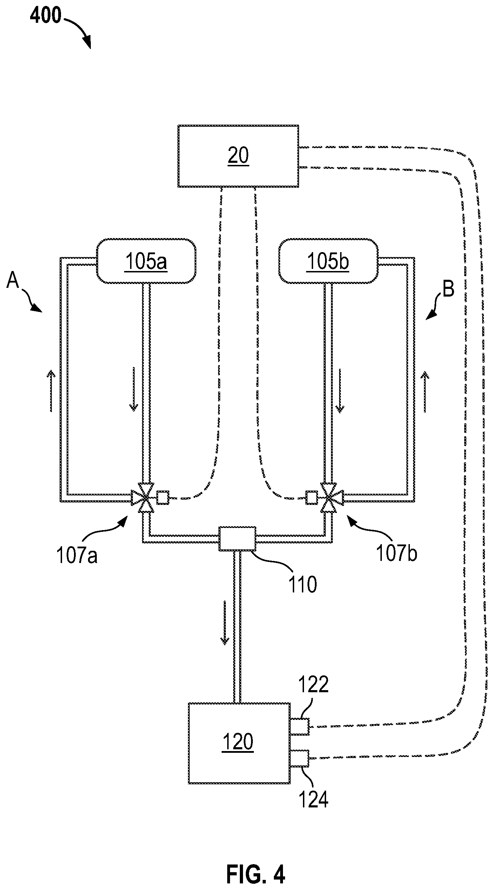

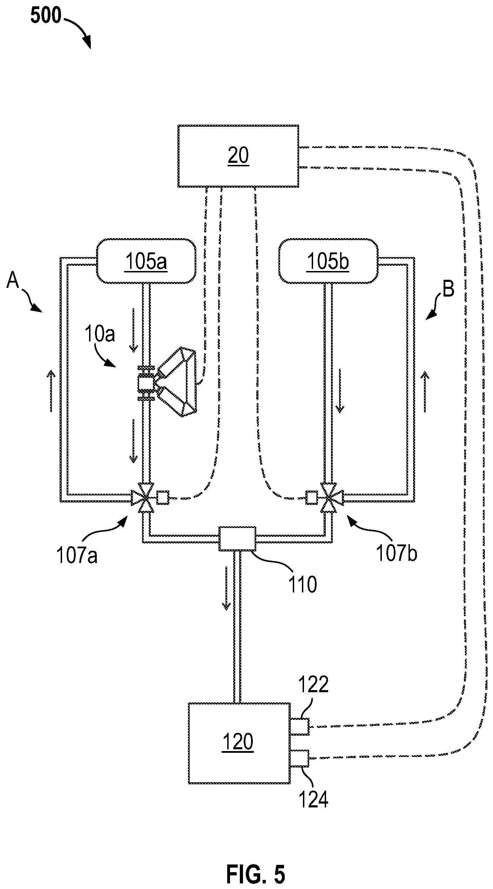

**FIGS. 4 and 5** show a three-component mixture system 400, 500 for controlling a concentration of a component in a three-component mixture obtained by mixing two fluid sources. As shown in FIGS. 4 and 5, the three-component mixture system 400, 500 comprise the first and second fluid tank 105a, 105b that respectively contain a first fluid and a second fluid. As shown in FIG. 4, the first and second fluid tank 105a, 105b are respectively fluidly coupled to the first and second fluid control valve 107a, 107b and in FIG. 5 is respectively fluidly coupled to the first sensor assembly 10a and the second fluid control valve 107b. In FIG. 5, the first sensor assembly 10a is fluidly coupled to the first fluid control valve 107a. In FIG. 4 and FIG. 5, the first and second fluid control valve 107a, 107b are respectively configured to receive the first and second fluid from the first and second fluid tank 105a, 105b. The first and second fluid control valve 107a, 107b are also respectively fluidly coupled to the first and second fluids to the first and second fluid tank 105a, 105b to provide a feedback loop. The first and second fluid control valve 107a, 107b are further fluidly coupled to a mixer 110, which in turn is fluidly coupled to a three-component mixture container 120. The mixer 110 mixes the first and second fluid and provides the mixture to the three-component mixture container 120. The three-component mixture container 120 accordingly receives the mixture from the mixer 110. The three-component mixture container 120 is communicatively coupled to the system electronics 20. In particular, as shown in FIGS. 4 and 5, the three-component mixture container 120 includes a density meter 122 and a refractive index (RI) transducer 124 that are communicatively coupled to the system electronics 20. The three-component mixture container 120 is configured to contain a three-component fluid. The density sensor 122 and refractive index transducer 124 are respectively configured to measure a density and a refractive index of the three-component fluid contained by the three-component mixture container 120.

As shown in FIGS. 4 and 5, fluid flows of the first and second fluid respectively provided by the first and second fluid tank 105a, 105b are illustrated by arrows. As can be appreciated from the direction of the arrows, the first and second fluid respectively flow from the first and second fluid tank 105a, 105b to the first and second fluid control valve 107a, 107b in FIG. 4 and the first sensor assembly 10a and the second fluid control valve 107b in FIG. 5. In FIG. 5 therefore the first fluid control valve 107a receives the first fluid from the first sensor assembly 10a. Accordingly, in both FIGS. 4 and 5, the first and second fluid control valve 107a, 107b respectively receive the first and second fluid provided by the first and second fluid tank 105a, 105b. The first and second fluid control valve 107a, 107b are configured to respectively receive the first and second fluid and provide the first and second fluid to their respective first and second fluid tank 105a, 105b and the three-component mixture container 120, depending on a valve position status of the first and second fluid control valve 107a, 107b.

As discussed above, the three-component mixture container 120 may receive and contain a three-component fluid from the mixer 110. With reference to FIGS. 4 and 5, the first fluid provided by the first fluid tank 105a may be comprised of a first and third component of the three-component fluid. The second fluid may be comprised of a second component and the third component. The third component may be a solvent for the first and second component. Accordingly, the first and second component may be solutes that are dissolved in the third component. For example, the first component may be an alcohol, such as ethanol that is consumed from beverages, and the second component may be sugar, such as sucrose, that is used to sweeten the beverage. In this example, the alcohol and the sugar may be dissolved in water. Accordingly, the first fluid may be comprised of alcohol and water and the second fluid may be comprised of sugar and water, although any suitable arrangement and solutions may be employed. For the three-component mixture system 400, 500, a concentration correlation parameter may be based on parameters that can be obtained from the density sensor 122 and the refractive index transducer 124, as is explained in more detail in the following.

Concentration correlation parameter

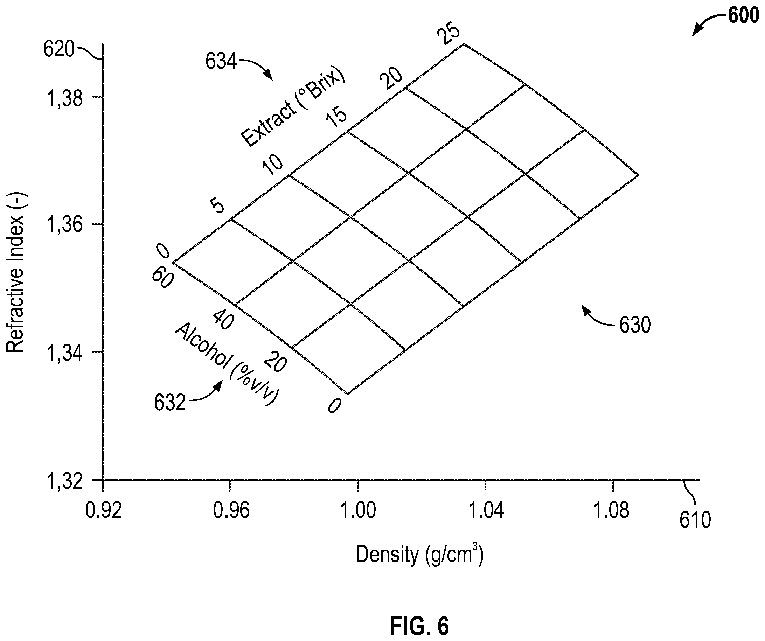

**FIG. 6** shows a concentration correlation parameter graph 600 for a three-component mixture. As shown in FIG. 6, the concentration correlation parameter graph 600 includes a density axis 610 in units of grams per cubic centimeters (g/cm$^3$) and a refractive index axis 620 that is unitless. The concentration correlation parameter graph 600 also includes a two-dimensional correlation parameter plot 630 that relates density values of the density axis 610 and refractive index values of the refractive index axis 620 to a corresponding alcohol percentage and °Brix value. As can be seen in FIG. 6, the concentration correlation parameter graph 630 has a generally parallelogram shape with curved sides comprising an alcohol percentage side 632 (on a volume basis) and an extract concentration side 634 in °Brix.

It should be appreciated that the concentration correlation parameter graph 600 shown in FIG. 6 is for alcohol-sugar-water mixtures that are at a reference temperature of 20 °C, although any suitable temperature may be employed. Accordingly, for the exemplary concentration correlation parameter graph 600, a measured density value may be corrected to the reference temperature of 20 °C. Similarly, additionally or alternatively, a measured refractive index value may also be corrected to a temperature corrected refractive index value using a process similar to that discussed above with reference to a temperature corrected measured density value. As can be appreciated, any suitable measured fluid parameter value that is used to determine a concentration correlation parameter value may similarly be corrected to a temperature corrected measured value.

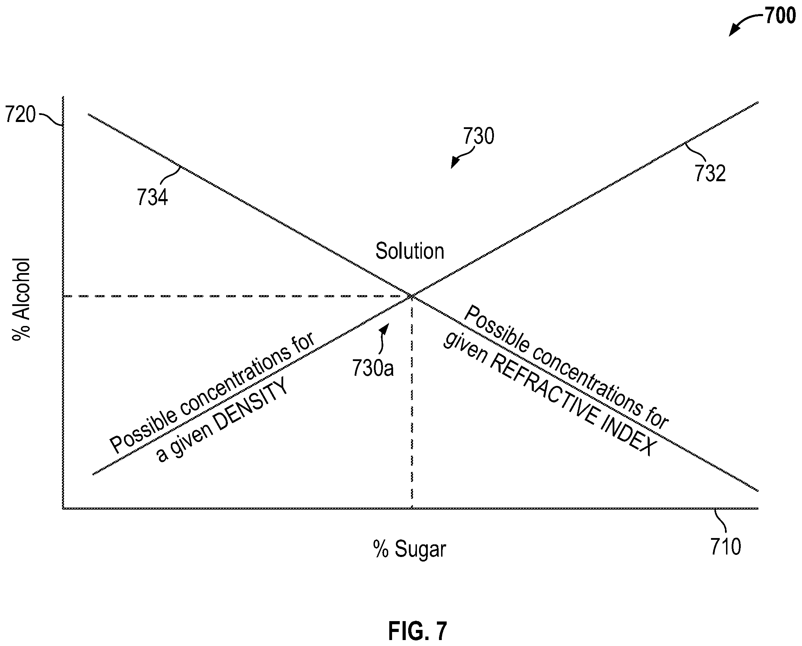

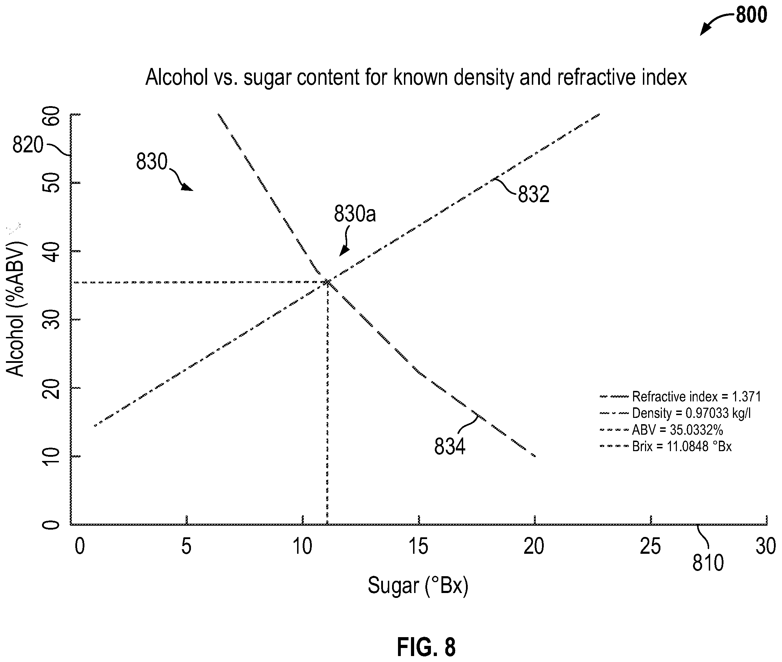

As can be appreciated, when a density value and a refractive index value are known (e.g., measured), a coordinate comprising an alcohol percentage value and an extract concentration value may be determined. Accordingly, a density value may have a functional relationship (e.g., linear) with a range of coordinates of alcohol percentage values and extract concentration values. Similarly, a refractive index value may have a functional relationship (e.g., linear) with a range of coordinates of alcohol percentage values and extract concentration values. An exemplary illustration of these functional relationships is shown in the following FIGS. 7 and 8. It should be appreciated that other three-component mixtures may be measured. For example, graphs similar to FIG. 6 may be formed for, for example, formaldehyde-methanol-water mixture, heavy oil/propane mixtures, two-component gel formulations, etc.

**FIGS. 7 and** 8 show alcohol and sugar concentration coordinate graphs 700, 800 including refractive index and density functional relationships to alcohol and sugar content. As shown in FIG. 7, the alcohol and sugar concentration coordinate graph 700 includes a sugar content axis 710 and an alcohol content axis 720 both on a percentage basis. As shown in FIG. 8, the alcohol and sugar concentration coordinate graph 800 includes a sugar content axis 810 in °Brix and an alcohol context axis 820 in %ABV. The alcohol and sugar concentration coordinate graphs 700, 800 also respectively include a density-refractive index plot 730, 830. The density-refractive index plots 730, 830 are shown as being comprised of a density plot 732, 832 and a refractive index plot 734, 834 respectively representing a density function and a refractive index function. An intersection of the density plot 732, 832 and the refractive index plot 734, 834 is a concentration value, or, with more particularity to FIG. 7, a concentration coordinate value comprised of a sugar content value in °Brix and an alcohol content value in %ABV, although any suitable coordinate units and values may be employed.

The density function represented by the density plot 732, 832 may relate percentage sugar values with percentage alcohol values based on a known density value. As shown in FIGS. 7 and 8, the density plot 732, 832 show that the sugar and alcohol content increases corresponding with a given density value. For example, the density plot 832 is for a density value of 0.97033 kilogram per liter (kg/l). As shown in FIG. 8, the density plot 832 is a line that changes from a coordinate of about 2 °Brix and 14 %ABV to a coordinate of about 23 °Brix and 60 %ABV. Similarly, the refractive index function represented by the refractive index plot 734, 834 may relate percentage sugar content values for a known refractive index value. For example, the refractive index plot 834 of FIG. 8 is for a refractive index value of 1.371. For example, in FIG. 8, the refractive index plot 834 is a curve comprising sectioned lines that changes from a coordinate of about 7 °Brix and 60 %ABV to a coordinate of about 20 °Brix and 10 %ABV. As discussed above, the concentration coordinate value is comprised of a sugar content value in °Brix and an alcohol content value in %ABV. For the example of FIG. 8, the concentration coordinate value is 11.0848 °Brix and 35.0332 %ABV.

Determining a concentration of a component in the three-component mixture

As can also be appreciated from the foregoing discussion, the concentration correlation parameter(s) may be for one of the first and second fluid source and/or the three-component mixture. By way of illustration, in the example discussed with reference to FIG. 3, the concentration correlation parameter was a scaling factor between a measured density of the first and second fluid source and a concentration of the corresponding first and second fluid source (e.g., % ABV and °Brix). In the examples discussed with reference to FIGS. 4-8, the concentration correlation parameter is refractive index. However, other concentration correlation parameters of a three-component mixture may be a velocity-of-sound, or the like.

As the foregoing discussion related to FIG. 3-5 and FIGS. 6-8, a known density of each of the fluid sources or the three-component mixture and a corresponding concentration correlated parameter can be used to determine a concentration of a component in a three-component mixture. For example, with reference to FIG. 3, the concentration correlation parameter is a density-concentration scaling factor that relates density values to concentration values. The concentrations of the components in the fluid sources can be used along with measured flow rates to determine a concentration of a component in a three-component mixture. More specifically, a total mass of the alcohol in the three-component mixture can be determined using above Equation [3] and a total mass of the sugar in the three-component mixture can be determined using the above Equation [4]. From these values, a concentration of the alcohol in the three-component mixture can be calculated using Equation [2]. With reference to FIGS. 4-6, the concentration correlation parameter is a density-refractive index coordinate that relates a given density-refractive index coordinate to an alcohol and sugar content coordinate respectively in %ABV and °Brix. More specifically, in the example of FIGS. 4-6, a density and a refractive index of the three-component mixture is measured. For the measured density and refractive index values of the three-component mixture a sugar and alcohol content coordinate can be obtained using FIG. 6.

Table 2 below illustrates various fluid parameters that may be measured to determine and control a concentration of a component in a three-component mixture. As shown in Table 2, a first fluid source and a second fluid source are respectively comprised of a sugar-water source and an alcohol-water source. In a first method, a concentration of the first fluid and a density of the second fluid may be inputs into a concentration determination model. An additional input may be a velocity of sound $VOS$ or a refractive index $RI$ of the three-component mixture.

Table 2. Inputs into a concentration determination model and model outputs

| Method | First fluid source (sugar-water) | | Second fluid source (alcohol-water) | | Three comp. mixture (alcohol-sugar-water) | |
|---|---|---|---|---|---|---|
| | Data | Control | Data | Control | Data | Output |
| 1 | $C$ (const.) | $\dot{m}$ | $\rho$ (meas.) | $C$ $\dot{m}$ | $VOS$ (nr) $RI$ (nr) | $C$ (alcohol-water-sugar) |
| 2 | $\rho$ (meas.) | $C$ $\dot{m}$ | $C$ (varies) | $\dot{m}$ | $VOS$ (nr) $RI$ (nr) | $C$ (alcohol-water-sugar) |

As can be seen, the controls for the first fluid source are a mass flow rate of the first fluid source and, for the second fluid source, are the concentration or mass flow rate of the second fluid source. The output is a concentration $C$ of the alcohol-sugar-water mixture.

Accordingly, a density of a first fluid source and a concentration of a second fluid source can be measured to determine a concentration of a first component in the first fluid source. By way of illustration, if the first fluid source is an alcohol-water source and the second fluid source is a sugar-water source, a concentration of an alcohol in the alcohol-sugar-water mixture can be determined by measuring a concentration of the alcohol-water source and a density of the sugar-water source. In this example, a mass flow rate of each of the alcohol-water and sugar-water sources may be used to determine a mass of the alcohol-sugar-water mixture, although any suitable means of determining the mass of the alcohol-sugar-water mixture may be employed. The second method is similar to the first method except that the density of the first fluid and the concentration of the second fluid are inputs. The control variables are similarly switched.

The exemplary first and second fluid sources discussed above are respectively an alcohol-water source and a sugar-water source, which may alternatively be referred to as alcohol-water and sugar-water solutions. Additionally, the three-component mixture discussed above was an alcohol-sugar-water mixture, although any suitable three-component mixture may be employed. For example, the three-component mixture may be a plastic. By way of illustration, during a polymerization reaction to form polypropylene, the propylene may be provided separately from the catalyst. In this example, density may be measured in the feed streams of the propylene. The primary manipulated variables for the reactor may be the catalyst-addition rate, the flowrate of the reactor cooling medium around the reactor, and the monomer, comonomer, and hydrogen flow rate. Hydrogen may be used to quench the reaction, which can limit a length of the hydrocarbon chain length. Any other suitable three-component mixtures may be employed.

As the foregoing discussion illustrates, various exemplary embodiments of a three-component mixture system may be employed. The above discussed and other three-component mixture systems can use a method, such as the method described below, to control a concentration of a component in a three-component mixture.

## Method

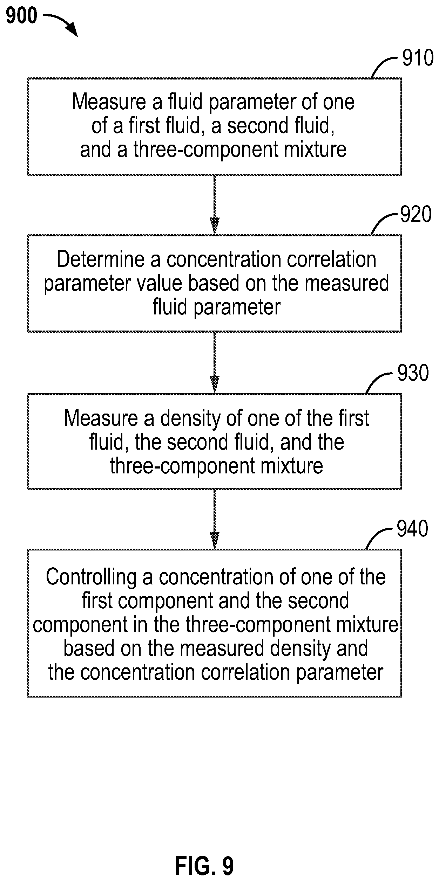

**FIG. 9** shows a method 900 of controlling a concentration of a component in a three-component mixture obtained by mixing two fluid sources. The method 900 may be performed by the system electronics 20 described above, although any suitable electronics may be employed. For example, the system electronics may alternatively be considered electronics that has some metering functions to measure a density as well as the other steps of method 900. As can be appreciated, the system electronics 20 can be a single circuit, distributed computing, and/or the like. The system electronics 20 and method 900 may be hardware implemented, digital signal processing, programmable gate arrays, programmable general-purpose computer or processor, and/or the like. The system electronics 20 may be communicatively coupled with other parts of the three-component mixture systems 100, 400, 500 by any suitable means, such as for example, wired or wireless, direct voltage/current control or indirect control via protocols, networked or non-networked, and/or the like.

As shown in FIG. 9, in step 910, the method 900 measures a fluid parameter of one of a first fluid, a second fluid, and a three-component mixture. The first fluid comprises a first component and a third component of the three-component mixture and the second fluid comprises at least a second component of the three-component mixture. In step 920, the method 900 determines a concentration correlation parameter value based on the measured fluid parameter. The concentration correlation parameter may be one of the foregoing discussed examples, although any suitable concentration correlation parameter may be employed. The method 900 in step 930 measures a density of one of the first fluid, the second fluid, and the three-component mixture. The first and second fluid may respectively be provided by the first and second fluid sources A, B although any suitable configuration that provides the first and second fluid may be employed. In step 940, the method 900 controls a concentration of one of the first component and the second component in the three-component mixture based on the measured density and concentration correlation parameter.

Controlling the concentration of one of the first component and the second component in the three-component mixture based on the measured density and concentration correlation parameter may comprise calculating the concentration of one of the first component and the second component in the three-component mixture based on the measured density, determining a desired concentration of the one of the first component and the second component in the three-component mixture, and/or comparing the calculated concentration of the one of the first component and the second component in the three-component mixture with the desired concentration of the one of the first component and the second component in the three-component mixture.

The second fluid may further comprise the third component so as to be comprised of the second component and the third component. Accordingly, the second fluid may be a solution of the second component and the third component. As a result, the first component may be a first solute, the second component may be a second solute, and the third component may be a solvent. As can be appreciated, the third component comprising a solvent may comprise the third component being water. In one example, the first fluid may comprise a sugar-water solution wherein the first component comprises sucrose and/or the second fluid may comprise an alcohol-water solution wherein the second component comprises ethyl alcohol.

Additionally, or alternatively, measuring the density of the one of the first fluid and the second fluid may comprise measuring a density of the first fluid with a first vibratory meter and a density of the second fluid with a second vibratory meter. Additionally, or alternatively, the method 900 may comprise measuring a flow rate of at least one of the first fluid and the second fluid. Measuring a flow rate of the at least one of the first fluid and the second fluid may comprise measuring a mass flow rate of at least one of the first fluid and the second fluid.

Determining the concentration correlation parameter based on the measured density may comprise determining one of a density-to-concentration factor value and an indirect concentration parameter value, as described above. The indirect concentration parameter value may be one of a refractive index value and a velocity of sound value of the three-component fluid. The measured fluid parameter of one of the first fluid, the second fluid, and the three-component fluid may comprise one of a mass flow rate, a density, a refractive index, and a velocity of sound of the one of the first fluid, the second fluid, and the three-component fluid. The method 900 may be further comprised of providing the first fluid comprised of the first component and the third component of the three-component mixture, providing the second fluid comprised of at least the second component of the three-component mixture, and mixing the first fluid and the second fluid to obtain the three-component mixture.

The foregoing description of FIGS. 3 through 9 discusses components of the three-component mixture that do not react with each other. The following describes how components of the three-components react with each other but the concentration of one of the components is nevertheless controlled.

Three-component mixtures with reactive components

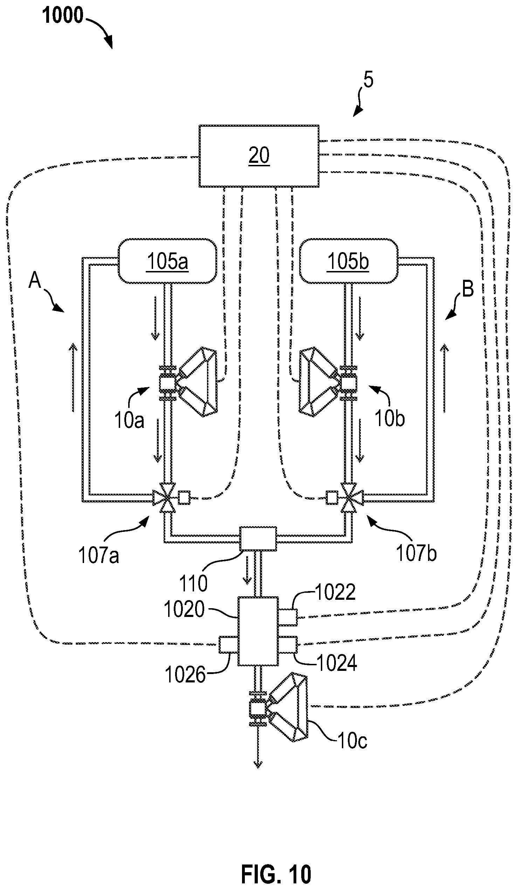

**FIG. 10** shows a block-pipeline view of a three-component mixture system 1000. The three-component mixture system 1000 is similar to the three-component mixture system 300 described above with reference to FIG. 3, except that the three-component mixture system 1000 of FIG. 10 produces a three-component mixture from a reaction. As shown in FIG. 10, the three-component mixture system 1000 includes the dual flow meter system 5 described above. Accordingly, as shown in FIG. 10, the dual flow meter system 5 includes the first and second sensor assembly 10a, 10b and the system electronics 20. The first and second sensor assembly 10a, 10b are shown as communicatively coupled with the system electronics 20. The three-component mixture system 1000 is also shown as being respectively comprised of a first and second fluid tank 105a, 105b that respectively contain a first fluid and a second fluid. The first and second sensor assembly 10a, 10b are fluidly coupled to the first and second fluid tank 105a, 105b. The first and second sensor assembly 10a, 10b are also respectively configured to receive the first and second fluid from the first and second fluid tank 105a, 105b. The first and second sensor assembly 10a, 10b are also fluidly coupled to the first and second fluid control valve 107a, 107b, which are respectively fluidly coupled to the first and second fluids to the first and second fluid tank 105a, 105b to provide a feedback loop. The first and second fluid control valve 107a, 107b are further fluidly coupled to a mixer 110 which in turn is coupled to a three-component mixture container 1020. The mixer 110 mixes the first and second fluid and provides the mixture to the three-component mixture container 1020. The three-component mixture container 1020 accordingly receives the three-component mixture from the mixer 110. The three-component mixture container 1020 is configured to contain a three-component fluid. The first and second fluid control valve 107a, 107b are further fluidly coupled to the mixer 110, which is fluidly coupled to the three-component mixture container 1020. The first and second fluid control valves 107a, 107b and the three-component mixture container 1020 are communicatively coupled with the system electronics 20. In particular, the three-component mixture container 1020 includes a density sensor 1022, a velocity of sound sensor 1024, and a temperature transducer 1026 which are communicatively coupled to the system electronics 20. The velocity of sound sensor 1024 is configured to measure a velocity of sound of the three-component mixture contained by the three-component mixture container 1020. Also shown is a third sensor assembly 10c that is configured to measure fluid parameters of the three-component mixture leaving the three-component mixture container 1020 of FIG. 10.

As shown in FIG. 10, the three-component mixture container 1020 of FIG. 10 comprises a continuous flow constant volume reactor, although any suitable reactor may be employed. The continuous flow constant volume reactor shown in FIG. 10 may be a continuous stirred tank reactor ("CSTR"), a plug flow reactor ("PFR"), or the like. A CSTR may be viewed as a model of a conventional well-mixed reactor. The CSTR may be employed where reactions kinetics are available and the reactor is believed to be well mixed. A reactor may be considered well mixed if the conditions everywhere in the reactor are the same as at the outlet of the reactor. By specifying forward and reverse reactions, the CSTR model can model equilibrium and rate-based reactions simultaneously.

A PFR models conventional plug flow behavior, assuming radial mixing but no axial dispersion. The reaction kinetics must be specified and the model has the same limitations as the CSTR model. Most simulations allow heat transfer to and/or from the plug flow reactor. Heat transfer can be with a constant wall temperature, which may be encountered in a fired tube, steam-jacketed pipe, or immersion coil or with countercurrent flow of a utility stream such as in a heat exchanger tube or jacketed pipe with cooling waters.

The CSTR can be viewed as maintaining the conditions needed (e.g., flow rates, temperature, pressure, etc.) to allow enough time for the fluid element to complete the reaction of A to B. As it relates to controlling reaction time and reaction rate to achieve the desired concentration of methanol, the size of the reactor tank would help determine the residence time to complete the reaction, as well as other design parameters like mixing and heat transfer. The flow rates in and out of the reactor will help control the residence time. Similarly, in the PFR, the length of pipe to complete reaction together with flow rates will determine residence time.

Accordingly, in the three-component mixture container 1020 of FIG. 10, the first and second fluid contain reactants that are reacted together to create products that are components of the three-component mixture with the appropriate residence time and reaction rate. It may be desirable to consume via reaction a certain amount of at least one of the reactants of the first and second fluid. Accordingly, after a desired amount of reaction, such as a desired amount of reaction time at a reaction rate, the three-component mixture may contain a desired amount of a first component of the first fluid. In some reactions it may be desirable to minimize the concentration of the first component of the three-component mixture while also maximizing a concentration of a product of the reaction. Accordingly, products of the reaction may be a second component and a third component of the three-component mixture.

By way of illustration, there could be an initial concentration of two reactive components, such as methanol and oxygen, in an initial mixture that react over a reaction time into two other components, such as formaldehyde and water. The initial concentrations of the two reactive components do not necessarily need to be "backed out" from the three-component mixture resulting from the reaction. These reactions may be run with an excess component, in this case the oxygen, and the control could be in the addition of methanol to the reactor. Using known stoichiometry and kinetics models, one can control the reaction to obtain desired products. The reaction rates ($r_1$, $r_2$, $r_3$) are a function of experimental or modeled constants ($A$, $E$) and concentrations of components.

$$CH_3OH + \frac{1}{4}O_2 \leftrightharpoons CH_2O + \frac{1}{2}H_2 + \frac{1}{2}H_2O \quad \text{Reaction [1]}$$

$$r_1 = A_1 e^{-\frac{E_{a1}}{RT}} \frac{C_{CH_3OH} C_{O_2}^{0.25}}{C_{H_2O}^{0.5}}$$

$$CH_2O + \frac{1}{2}O_2 \leftrightharpoons H_2 + CO_2 \quad \text{Reaction [2]}$$

$$r_2 = A_2 e^{-\frac{E_{a2}}{RT}} \frac{C_{CH_2O} C_{O_2}^{0.5}}{C_{H_2}^{0.5}}$$

$$H_2 + \frac{1}{2}O_2 \rightarrow H_2O \quad \text{Reaction [3]}$$

$$r_3 = A_3 e^{-\frac{E_{a3}}{RT}} C_{H_2} C_{O_2}^{0.5}$$

It should be appreciated that in the above Reactions [1] through [3] that the gas transients may be substantially consumed during the reaction. Accordingly, by measuring the concentration of one or more of the products, such as the formaldehyde, water, and unreacted methanol in this example, it is possible to better control the reactor by controlling the feeds of reactants and the reactor temperature. The following explains how such concentrations may be determined by referring to the formaldehyde, water, and unreacted methanol example discussed above.

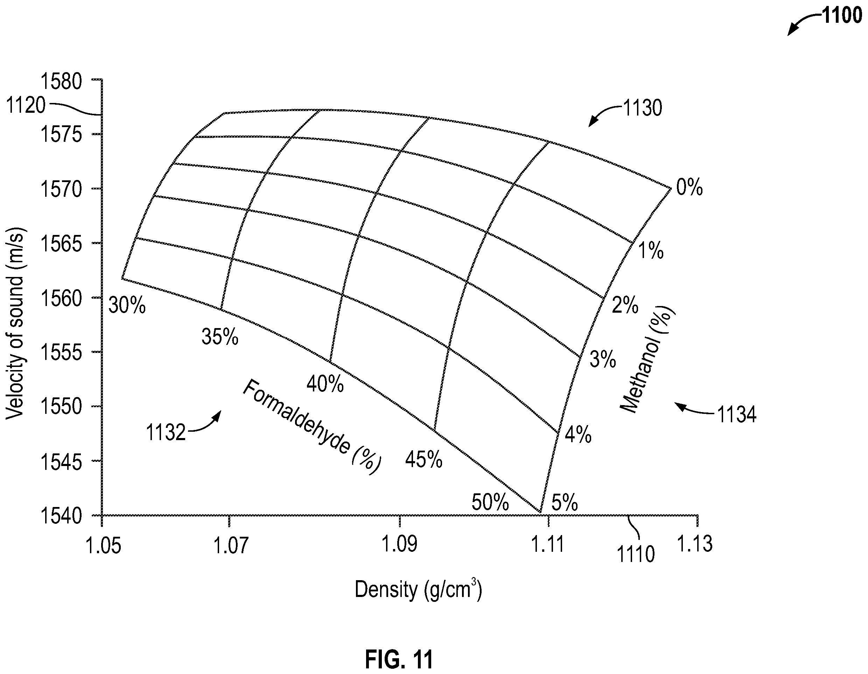

**FIG. 11** shows a concentration correlation parameter graph 1100 for a three-component mixture having reactive components. As shown in FIG. 11, the concentration correlation parameter graph 1100 includes a density axis 1110 in units of grams per cubic centimeters (g/cm$^3$) and a velocity of sound axis 1120 that is in units of meters per second (m/s). The concentration correlation parameter graph 1100 also includes a two-dimensional correlation parameter plot 1130 that relates density values of the density axis 1110 with velocity of sound values of the velocity of sound axis 1120. As can be seen in FIG. 11, the concentration correlation parameter graph 1130 has a generally curved parallelogram shape with curved sides comprising a formaldehyde percentage side 1132 and a methanol percentage side 1134.

As can be appreciated, when a density value and a velocity of sound value, such as for example, temperature corrected measured density and velocity of sound values, are known, a coordinate comprising a formaldehyde percentage value and a methanol percentage value may be determined. Accordingly, a density value may have a functional relationship (e.g., linear) with a range of coordinates of formaldehyde percentage values and methanol percentage values. Similarly, velocity of sound values may have a functional relationship (e.g., linear) with a range of coordinates of formaldehyde percentage values and methanol percentage values similar to those shown in the above FIGS. 7 and 8.

As can be appreciated from the foregoing discussion, when a concentration of methanol is known, it may be determined whether the reactions of Reactions [1] through [3] are substantially completed. For example, it may be desirable to have a methanol concentration of zero percent with a maximized yield of formaldehyde. Accordingly, assuming that the concentration correlation parameter graph 1100 of FIG. 11 represents a highest possible yield of formaldehyde, it may be desirable for a methanol concentration of zero percent and formaldehyde concentration of fifty percent. As can be appreciated, the particular desirable concentrations may vary due to the reactants and products, reactor capabilities, etc.

The reaction may be controlled in part by controlling flow rates of the reactants, reaction control agents such as quenching fluids, reagents, and/or the like, as well as reactor design properties of the three-component mixture container 1020 and reaction parameters of the reaction of the reactants supplied to the three-component mixture container 1020. For example, referring to the formaldehyde, water, and methanol example discussed above, water could be supplied with methanol to reduce the reaction rate of the methanol. Additionally, or alternatively, a reactor temperature may also be maintained at a specific range and/or a catalytic element may be employed to promote the reaction. The catalytic converter may be fixed to the reactor structure.

These and other parameters may be controlled by the system electronics 20 performing a method or methods, such as the method described below.

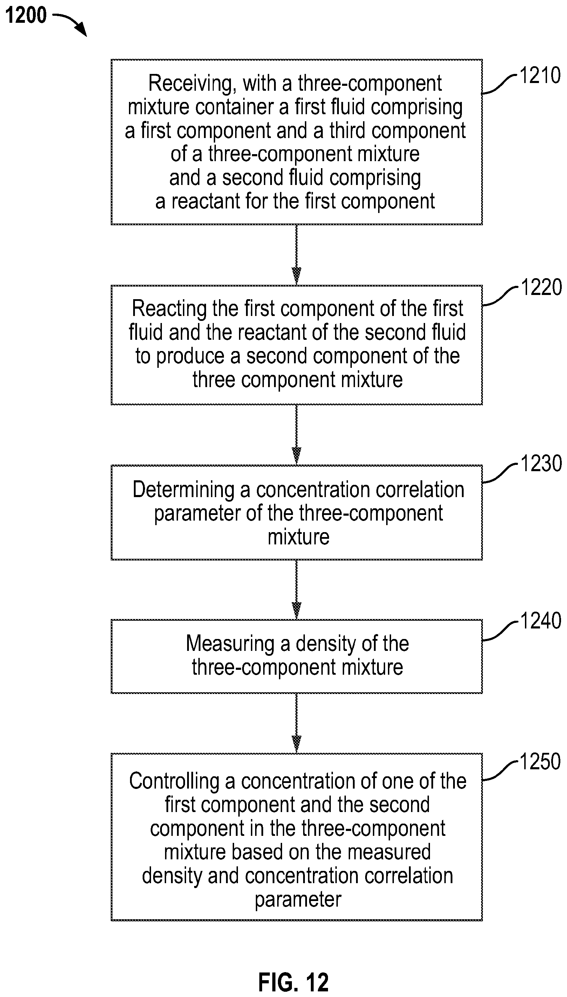

**FIG. 12** shows a method 1200 of controlling a concentration of a component in a three-component mixture obtained by mixing two fluid sources. The method 1200 may be performed by the three-component mixture system 1000 shown in FIG. 10, although any suitable three-component mixture system may be employed. As shown in FIG. 12, in step 1210, the method 1200 receives, with a three-component mixture container, such as the three-component mixture container 1020 described above, the first fluid comprising a first component and a third component of a three-component mixture and the second fluid comprising a reactant for the first component. The method 1200, in step 1220, reacts the first component and the reactant to produce a second component of the three-component mixture. In step 1230, the method 1200 determines a concentration correlation parameter of the three-component mixture and, in step 1240, measures a density of the three-component mixture. The method 1200, in step 1250, controls a concentration of one of the first component and the second component in the three-component mixture based on the measured density and concentration correlation parameter.

The method 1200 may determine the concentration correlation parameter of the three-component mixture by measuring a fluid parameter of the three-component mixture and determining the concentration correlation parameter of the three-component mixture based on the measured fluid parameter of the three-component mixture. Additionally, or alternatively, controlling the concentration of one of the first component and the second component in the three-component mixture based on the measured density and concentration correlation parameter may further comprise calculating the concentration of one of the first component and the second component in the three-component mixture based on the measured density, determining a desired concentration of the one of the first component and the second component in the three-component mixture, and comparing the calculated concentration of the one of the first component and the second component in the three-component mixture with the desired concentration of the one of the first component and the second component in the three-component mixture.

The step 1250 or controlling the concentration of the one of the first component and the second component in the three-component mixture based on the measured density and the concentration correlation parameter may comprise controlling a reaction time of the first component and the reactant for the first component. Additionally, or alternatively, controlling a concentration of the one of the first component and the second component in the three-component mixture based on the measured density and concentration correlation parameter comprises controlling a mass flow rate of at least one of the first fluid and the second fluid. The method may further comprise controlling at least one of the reaction time of the first component and the reactant for the first component and the mass flow rate of the at least one of the first fluid and the second fluid based on the comparison of the calculated concentration of the one of the first component and the second component in the three-component mixture with the desired concentration of the one of the first component and the second component in the three-component mixture.

It should be appreciated that the second fluid may further comprise the third component so as to be comprised of the reactant for the first component and the third component. In an example, the first component comprises methanol, the reactant comprises oxygen, the second component comprises formaldehyde, and the third component comprises water. The three-component mixture container comprises a continuous flow fixed reaction volume reactor. For example, the continuous flow fixed reaction volume reactor comprises one of a PFR and a CSTR. The method 1200 may further comprise providing the first fluid comprising the first component and the third component of the three-component mixture to the three-component mixture container and providing the second fluid comprising the reactant for the first component to the three-component mixture system.

Although the foregoing describes various three-component mixture systems 100, 400, 500, 1000, and methods 900, 1200, it should be appreciated that other three-component mixture systems and methods may be employed. It should be appreciated that a particular configuration and combination of sensors may depend on what parameter and/or properties are being measured. For example, density may be used for two-component concentrations. Accordingly, a Coriolis meter may be employed to obtain such measurements. Selecting the other sensor for the three-component problem may depend on the solution physics. For example, if we have a solution that produces ions (e.g., when table salt is dissolved in water), then a conductivity probe could be chosen to keep track of salt concentration, while the density could keep track of the other component (sugar, etc.) that has a direct density relationship. Another example could be a scrubber system for an industrial exhaust. For example, a packed column with a solution of water and calcium carbonate flowing from the top of the column may be used to neutralize an exhaust containing sulfur (e.g., in the form of $SO_2$) provided at the bottom of the column. The density can be used to keep track of calcium carbonate concentration and a pH probe could keep track of sulfur content captured in the solution after the gas leaves the system. In this scrubber system example, the pH changes as the sulfur starts acidifying the water and therefore a pH probe would be a good choice to use.

The embodiments described above provide the three-component mixture systems 100, 400, 500, 1000 and the methods 900, 1200 to control a concentration of a component in a three-component mixture obtained by mixing two fluid sources. As is explained above, three-component mixture systems 100, 400, 500, 1000 and the methods 900, 1200 are able to measure a density and a fluid parameter and based on these two values control a concentration of a component in the three-component mixture. The concentration of the component may be accurately controlled because the density of the first and/or second fluids from the first and/or second fluid sources is correlated with the concentration of the first and/or second fluid. Additionally, the fluid parameter of the first and second fluid, or the three-component mixture is also correlated with the concentration of the fluid in the three-component mixture, before or after the first and second fluids are mixed. By accurately measuring both the concentration of at least one of the first and second fluids and the three-component mixture, the concentration of the component may similarly be controlled.

By way of illustration, assuming that the concentration of a sugar-water source is constant, a concentration of an alcohol-water source may be controlled so as to achieve a desired concentration of the alcohol in an alcohol-sugar-water mixture, although any suitable control parameters may be employed. Similarly, as is described above, respectively measuring a density and a fluid parameter, such as refractive index, of the first fluid and the second fluid can allow a concentration of one of the components in the three-components to be determined. The relative flow rate of the first fluid and the second fluid can be controlled to ensure that the concentration of a component, such as, for example, the first component of the three-component mixture is also accurately controlled.

In another illustrative example where a reaction occurs, where a methanol is reacted with oxygen to produce formaldehyde, flow rates of the methanol and the oxygen may be controlled to ensure that the methanol in a formaldehyde, water, and methanol mixture is minimized. That is, it may be desirable to maximize a formaldehyde yield while also minimizing the amount of methanol that is present in a three-component mixture of the formaldehyde, water, and methanol. The minimization of the methanol may be a trade off with a formaldehyde yield because a large amount of methanol may be required to begin the reaction. As a result, controlling a concentration of the methanol and/or the formaldehyde may be beneficial in that the flow rates, as well as other parameters of the three-component mixture, could be adjusted to achieve the desired amount of methanol and/or the formaldehyde.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other systems and methods for controlling a concentration of a component in a three-component mixture obtained by mixing two fluid sources and not just to the embodiments described above and shown in the accompanying figures. Accordingly, the scope of the embodiments described above should be determined from the following claims.

**Claims**

1. A method of controlling a concentration of a component in a three-component system by mixing two fluid sources, the method comprising:

   receiving, with a three-component mixture container, the first fluid comprising a first component and a third component of a three-component mixture and the second fluid comprising a reactant for the first component;
   reacting the first component and the reactant to produce a second component of the three-component mixture;
   determining a concentration correlation parameter of the three-component mixture;
   measuring a density of the three-component mixture; and
   controlling a concentration of one of the first component and the second component in the three-component mixture based on the measured density and concentration correlation parameter.

2. The method of claim 1, wherein determining a concentration correlation parameter of the three-component mixture comprises measuring a fluid parameter of the three-component mixture and determining the concentration correlation parameter of the three-component mixture based on the measured fluid parameter of the three-component mixture.

3. The method of one of claim 1 and claim 2, wherein controlling the concentration of one of the first component and the second component in the three-component mixture based on the measured density and concentration correlation parameter comprises:

   calculating the concentration of one of the first component and the second component in the three-component mixture based on the measured density;
   determining a desired concentration of the one of the first component and the second component in the three-component mixture; and

comparing the calculated concentration of the one of the first component and the second component in the three-component mixture with the desired concentration of the one of the first component and the second component in the three-component mixture.

4. The method of one of the foregoing claims 1 through 3, wherein controlling the concentration of the one of the first component and the second component in the three-component mixture based on the measured density and the concentration correlation parameter comprises controlling a reaction time of the first component and the reactant for the first component.

5. The method of one of the foregoing claims 1 through 4, wherein controlling a concentration of the one of the first component and the second component in the three-component mixture based on the measured density and concentration correlation parameter comprises controlling a mass flow rate of at least one of the first fluid and the second fluid.

6. The method of one of the foregoing claims 3 through 5, further comprising controlling at least one of the reaction time of the first component and the reactant for the first component and the mass flow rate of the at least one of the first fluid and the second fluid based on the comparison of the calculated concentration of the one of the first component and the second component in the three-component mixture with the desired concentration of the one of the first component and the second component in the three-component mixture.

7. The method of one of the foregoing claims 1 through 6, wherein the second fluid further comprises the third component so as to be comprised of the reactant for the first component and the third component.

8. The method of one of the foregoing claims 1 through 7, wherein the first component comprises methanol, the reactant comprises oxygen, the second component comprises formaldehyde, and the third component comprises water.

9. The method of one of the foregoing claims 1 through 8, wherein the three-component mixture container comprises a continuous flow fixed reaction volume reactor.

10. The method of claim 9, wherein the continuous flow fixed reaction volume reactor comprises one of a plug flow reactor and a continuous stirred tank reactor.

11. The method of one of the foregoing claims 1 through 10, further comprising the steps of:

   providing the first fluid comprising the first component and the third component of the three-component mixture to the three-component mixture container; and
   providing the second fluid comprising the reactant for the first component to the three-component mixture system.

12. The method of one of the foregoing claims 1 through 11, wherein at least one of the measured density and the measured fluid parameter is a temperature corrected measured value.

13. A three-component mixture system (1000) configured to control a concentration of a component of a three-component mixture obtained by mixing two fluid sources, comprising:

   a first fluid source (A) configured to provide a first fluid comprising a first component and a third component of a three-component mixture;
   a second fluid source (B) configured to provide a second fluid comprising a reactant for the first component;
   a three-component mixture container (1020) fluidly coupled to the first fluid source (A) and the second fluid source (B) and configured to receive the first fluid from the first fluid source (A) and the second fluid from the second fluid source (B);
   a system electronics (20) communicatively coupled with at least one of the first fluid source (A), the second fluid source (B), and the mixture container (120), the system electronics (20) being configured to perform the methods of claims 1 through 12.

14. The three-component mixture system (1000) of claim 13, wherein the system electronics (20) is further configured to receive the fluid parameter of the three-component mixture from the three-component mixture container (1020).

15. The three-component mixture system (1000) of one of claim 13 and claim 14, wherein the three-component mixture container (1020) comprises a continuous flow fixed reaction volume reactor.

**FIG. 1**

EP 4 752 669 A2

FIG. 2

**FIG. 3**

**FIG. 4**

FIG. 5

**FIG. 6**

**FIG. 7**

EP 4 752 669 A2

FIG. 8

900 ⟍

910

Measure a fluid parameter of one
of a first fluid, a second fluid,
and a three-component mixture

920

Determine a concentration correlation
parameter value based on the measured
fluid parameter

930

Measure a density of one of the first
fluid, the second fluid, and the
three-component mixture

940

Controlling a concentration of one of the
first component and the second
component in the three-component mixture
based on the measured density and
the concentration correlation parameter

FIG. 9

FIG. 10

**FIG. 11**

EP 4 752 669 A2

1200

Receiving, with a three-component
mixture container a first fluid comprising
a first component and a third component
of a three-component mixture
and a second fluid comprising
a reactant for the first component
— 1210

Reacting the first component of the first
fluid and the reactant of the second fluid
to produce a second component of the
three component mixture
— 1220

Determining a concentration correlation
parameter of the three-component
mixture
— 1230

Measuring a density of the
three-component mixture
— 1240

Controlling a concentration of one of the
first component and the second
component in the three-component
mixture based on the measured
density and concentration correlation
parameter
— 1250

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015010072 A,  Wheeler